# EUROPEAN PATENT APPLICATION

(11) **EP 4 427 853 A1**
(43) Date of publication of application: **11.09.2024**
(21) Application number: 22877745.4
(22) Date of filing: 05.10.2022
(51) Int. Cl.: B08B 1/00, B08B 1/02, B08B 1/04, F24S 40/20, F24S 40/40, H02S 40/10, H02S 40/30, B62D 55/00, B25J 9/16, B25J 11/00

(54) **AUTOMATED SYSTEM FOR CLEANING SOLAR PANELS**

(30) Priority: 05.10.2021 US 202163252537 P
(71) Applicant: Inti-Tech SPA, La Reina Santiago (CL)
(72) Inventor: CONTRERAS HERRERA, Camilo Antonio, Santiago (CL); FLORES GARRIDO, Camilo Emmanuel, Santiago (CL); MUÑOZ ESTRADA, Diego Luis, Santiago (CL); JARA LIRA, Alexis Andrés, Santiago (CL); GARCIA ACEVEDO, Carlos Alberto, Santiago (CL); LE COSTAOUEC, Vincent, Santiago (CL); MARABOLÍ CONTARDO, Luis Robinson, Santiago (CL); URRUTIA LAMA, Felipe Sebastián, Santiago (CL); MOLINA MEJIAS, Alexander Ivan, Santiago (CL)
(74) Representative: Hoffmann Eitle
(86) International application number: PCT/CL2022/050100
(87) International publication number: WO 2023/056572

(57) **Abstract**

An automated system for cleaning solar panels in a solar plant, characterized in that it comprises: at least one chassis, which comprises at least two vertical bars; and at least one longitudinal upper bar, which joins the at least two vertical bars; at least two wheels, arranged at one of the ends of each of the at least two vertical bars; at least one cleaning element; at least one driving means, to mobilize the at least two wheels; and at least one controller means, to control the operation of each of the at least two wheels.

## Description

### FIELD OF THE INVENTION

The present invention relates to an automated panel cleaning system, in particular solar or photovoltaic panels in solar plants, where its operation is based on at least one chassis-type structure, comprising at least two wheels and at least one element, cleaning, configuring a solution that allows autonomous mobilization between the rows of solar panels, avoiding the presence of operators during cleaning tasks, not only of one row, but of the entire plant.

Said technology solves several problems of the current technique, which become evident when evaluating the existing solutions and the specific characteristics of the invention in the following sections of this document.

### BACKGROUND OF THE INVENTION

Currently, there is a growing interest in improving the operating conditions and efficiency of photovoltaic plants, which have become an important source of renewable energy around the world. These plants are mostly located in desert areas of high radiation, with operating conditions that are quite aggressive for the components of the systems involved.

In this sense, one of the factors that affect the performance of solar panels, and that causes a considerable economic loss in the operation of the plant, is related to soiling, caused by the particulate material that is deposited. on the surface of the panels, preventing the available radiation from fully reaching the cells, thus reducing the power generation capacity of the plant. Fouling, depending on the geographical location and climatic factors, can considerably reduce the expected income and the life of the equipment due to the accelerated deterioration of the materials.

With the exponential increase in the surface covered by photovoltaic plants, and because it is not possible to avoid exposing the panels to the elements, they are made efficient solutions are necessary to carry out the cleaning of the surface of the panels, in order to maintain the performance of the plant at a permanently high level. To reduce losses due to fouling, optimized and high-frequency cleaning methods are needed, that is, they can cover the entire plant and the task is carried out with such frequency that the accumulation of particulate matter affects revenues as little as possible electricity generation.

Furthermore, due to the location of solar plants, which are often located in remote or difficult-to-access areas, technologies are required that reduce or avoid human presence in them, which also avoids the risk of accidents and/or injuries. labor, both on the way to the plant and in the different tasks to be carried out. In this way, human resources are used in absolutely necessary tasks, in which high-level decision making is required, leaving the simplest tasks, such as cleaning panels, in charge of systems and robots specially designed for these tasks.

In this context, and specifically in the field of systems for cleaning solar panels, there are various solutions available in the state of the art, which meet the purpose of keeping the arrays of panels arranged in photovoltaic plants free of dust. However, there are a series of problems associated with its implementation that none of these solutions is capable of addressing. One of these problems is related to the loss of efficiency in the panels, as a result of the large surface area of the cleaning systems, which pass over the panels, producing shadows on them, preventing solar radiation from reaching the cells. Another problem present in current systems is related to the loss of efficiency due to some damage to the system or one of its components, since, in this situation, the system must be completely removed for review and repair, leaving the panels at the mercy of dust, unless there is a complete backup system, which makes the process extremely expensive, considering the size of the photovoltaic plants.

On the other hand, many of these cleaning systems and systems are only capable of cleaning a row of solar panels, since they have systems that allow them to be attached to the structure on which the panels are mounted or can run over them directly. However, at the end of the cleaning of the row, said systems and systems must be uncoupled by human personnel and subsequently transferred to the next row, in order to continue with the cleaning process. This means that there must necessarily be workers in the plant to help with these cleaning tasks, with the consequent risk of injuries or accidents. The only way to solve this problem is to implement a cleaning system or system per row of panels solar, but this solution becomes impractical due to the high cost that this would represent.

Some systems partially address this last problem, incorporating a vehicle, such as a tractor, to move the cleaning system between one row and another, or by providing autonomous systems that run through the different rows of solar panels on rails installed on the same route that the cleaning system must perform. However, these technologies do not provide a definitive solution to avoid human presence, where, although some solutions operate autonomously or remotely controlled, they require the implementation of costly civil works for the installation of the rails on which must go through the cleaning system.

The present invention takes care of these and other problems.

In the field of patents there are also solutions that aim at cleaning solar panels. For example, patent application CN212576959U describes an automatic cleaning system for solar panels, which is related to the technical field of photovoltaic energy generation equipment. The self-cleaning system includes rails respectively arranged on the ground on the front and rear sides of the solar panel, and between the two rails a frame is arranged for advancing in a gantry manner along the rails, which is straddled. on the solar panels in the front and rear direction. The frame body is provided with a first driving component for driving the frame body, and a cleaning assembly for cleaning the solar panels. The system can automatically clean the solar panel, saving the cost of manual cleaning, not only reducing the work intensity of workers, but also improving cleaning efficiency and ensuring the cleanliness of the surface of the solar panel.

In relation to what is described in this patent application, although it can be seen that the system addresses several technical problems, such as avoiding the presence of operators during the cleaning process and being able to clean all the plant panels through a single system. However, it can be seen that in order for said system to move through the solar installation, it is necessary to use rails to guide its movement, and it is not capable of moving freely through the land of the solar plant. As a consequence of the above, its wheels are rigid, not having the freedom of movement and independence of operation that is present in the wheels of the system of the present invention, which allows the system to move without problems over any type of terrain. Furthermore, as mentioned above, the presence of rails implies a high cost in terms of materials, manufacturing and installation, also disturbing free traffic in the solar plant, which increases the risk of accidents. Finally, it is observed that the cleaning brush of application CN212576959U does not have all the degrees of freedom that the cleaning element of the system of the invention does contemplate, which allows it to move in multiple directions to avoid any obstacle that may exist in the cleaning route.

Another example is that disclosed in patent application CN108927348A, which describes an automatic cleaning equipment for a photovoltaic power plant, which comprises a support plate, where the upper end of the support plate is fixedly connected with two symmetrical support rods, and the support rods are placed vertically. The upper ends of the support rods are connected with obliquely arranged solar panels. A second support plate is provided on the right side of the support plate, arranged horizontally. A plurality of rollers are fixedly connected to the lower end of the second support plate. A fixed post and a rod are connected respectively, and a fixed seat is connected to the center of the upper end of the second support plate. The servomotor of the cleaning equipment makes the second connecting rod reciprocate through the cam, so that the movable rod drives the cleaning brush to repeatedly clean the solar panel, being convenient to use in large areas, thus reducing the cost of cleaning.

In this case, although the technology addresses some of the problems present in the state of the art, which are the complete automation of the cleaning process, without the need for operators, and the no need to have rails for the movement of the cleaning equipment. cleaning, said document does not describe or suggest the particular associated cleaning element of the system of the present invention, which addresses another problem that points to the sliding of the cleaning element on the surface of the panels, which must be done gently, in order to avoid damaging the panels in case the brush collides with any obstacle or unevenness that it encounters along its path. Thanks to the multiple sliding elements, such as bushings, arranged on different clamping bars of the system chassis, it is possible that the cleaning element can move at practically any angle, providing smooth movement over the surface of the panels. On the other hand, document CN108927348A does not describe the independent operation of each of the wheels of the system of the invention, each of them being able, for example, to rotate on its own axis, thus providing a system that is capable of mobilizing to overcome any type of obstacle that may exist in the path between the rows of solar panels.

Therefore, it is necessary to have a cleaning system capable of cleaning solar panels, which not only fulfills this function, but also minimizes the performance losses of the panel array in which it is operating, reducing any risk of damaging the panels during the cleaning process, in addition to being able to have quick and simple assembly and disassembly, which does not interfere with the structure of the panel array or that requires other civil works for its operation, and that is also capable of operating autonomously or remotely, in order to avoid the presence of operators during cleaning tasks, reducing the risk of accidents. This and other advantages associated with other aspects of the technology are described in greater detail below.

### DESCRIPTION OF THE INVENTION

The present technology refers to an automated panel cleaning system, in particular solar or photovoltaic panels in solar plants, where in its most essential aspects, the cleaning system comprises:
- at least one chassis, comprising:
   ∘ at least two vertical bars;
   ∘ at least one upper longitudinal bar, which joins the at least two vertical bars;
- at least two wheels, arranged at one of the ends of each of the at least two vertical bars;
- at least one cleaning element;
- at least one driving means, to mobilize the at least two wheels; and
- at least one controller means, to control the operation of each of the at least two wheels.

Through the characteristics of the automated cleaning system, it is possible to offer an automated solution for cleaning photovoltaic panels in solar plants, which does not require the presence of operators during cleaning tasks thanks to the fact that the system is capable of moving independently, through the rows of solar panels.

Alternative modalities of the technology are described below, based on the specific characteristics and the different capabilities and advantages that it has compared to current technologies.

According to another embodiment of the invention, the at least one cleaning element is attached in its central part to at least one upper bar.

According to another embodiment of the invention, the system further comprises at least one additional driving means, which allows the cleaning element to rotate. This allows a deep and better quality cleaning on the surface of the panels.

According to another embodiment of the invention, the system further comprises at least two additional vertical bars.

According to another embodiment of the invention, the system further comprises at least one additional upper longitudinal bar and at least two upper crossbars, the four upper bars forming an upper frame.

According to another embodiment of the invention, the system further comprises at least two cables connected to the ends of the at least one cleaning element, and connected to at least two carriages, arranged on any of the at least four upper bars.

According to another embodiment of the invention, the system further comprises at least one arm connected to one of the ends of the at least one cleaning element and to one of the at least two carriages.

According to another embodiment of the invention, the system also comprises at least one central bar, which crosses transversely through the center of the upper frame and which is joined at its ends to the at least two upper longitudinal bars.

According to another embodiment of the invention, the at least one central bar comprises at least one adjustment means, such as a bar or a cable.

According to another embodiment of the invention, the at least one cleaning element is joined in its central part to at least one adjustment means.

According to another embodiment of the invention, the system further comprises at least two additional wheels, arranged at one of the ends of each of the at least two additional vertical bars.

According to another embodiment of the invention, the system further comprises at least one additional driving means and at least one additional controlling means, to mobilize and control the operation of each of the at least two wheels. In a preferred embodiment, the system further comprises at least one additional driving means and at least one additional controlling means, to mobilize and control the operation of the at least two wheels and the at least two additional wheels. According to another preferred embodiment. The system further comprises at least three additional driving means and at least three additional controlling means, to mobilize and control the operation of each of the at least two wheels and each of the at least two additional wheels, respectively.

According to the above, the cleaning system of the invention can be configured under two main modalities. The first, corresponding to a portal, made up of two vertical bars and an upper longitudinal bar, which joins both vertical bars, with the cleaning element supported by the upper longitudinal bar, and the second modality, where the portal is formed through of four vertical bars, which are joined at the top thanks to four upper bars that form an upper frame, where a central bar transversely crosses said upper frame, supporting the cleaning element. The adoption of the first or second modality will depend on the operating conditions at the solar plant, as well as the ground conditions.

According to another embodiment of the invention, the system further comprises at least one compartment to house the at least one driving means and the at least one controlling means. Preferably, the system further comprises a compartment to house each of the at least one driving means and the at least one controlling means.

According to another embodiment of the invention, the system also comprises at least two height regulating elements, arranged on the at least two vertical bars. Preferably, the system also comprises at least four height regulating elements, arranged on the at least four vertical bars. Said height regulating elements allow the height of each of the vertical bars of the chassis to be adjusted independently, consequently regulating the height of the cleaning element with respect to the surface of the solar panels. In this way, the system of the invention is capable of regulating its height depending on the cleaning needs. Furthermore, thanks to the possibility of adjusting the height of each of the vertical bars, it is possible to avoid or avoid any obstacle that may arise in the path of the cleaning system between the rows of panels.

According to another embodiment of the invention, the system further comprises at least one additional driving means and at least one additional controlling means, to mobilize and control the operation of the at least two or four height regulating elements. In a preferred embodiment, each of the height regulating elements comprises at least one driving means and at least one controlling means for its operation.

According to another embodiment of the invention, the at least one adjustment means comprises at least one height adjustment element, arranged in its central part and connecting with the central part of the at least one cleaning element.

According to another embodiment of the invention, the at least one adjustment means comprises at least two displacement elements, arranged at its ends and coupled with the at least one central bar.

The displacement elements, by allowing the ends of the adjustment means to slide over the central bar, in turn allow the adjustment means to contract in its central part, thanks to the height adjustment element, thus achieving that the element cleaning device regulate its height with respect to the surface of the solar panels. Therefore, this is a second way of regulating the height of the cleaning element, which can also be done through the height regulating elements. The way in which the height of the cleaning element will be regulated will be chosen depending on the ground conditions, where the first alternative described may be useful.

According to another embodiment of the invention, the system further comprises at least one additional driving means and at least one additional controlling means, to mobilize and control the operation of the height adjustment element and the displacement elements. In a preferred embodiment, each of the height adjustment element and the displacement elements comprises at least one driving means and at least one controlling means for its operation.

According to another embodiment of the invention, the at least one central bar comprises at least two displacement elements, arranged at its ends and coupled with at least two opposite upper bars. As explained above, the displacement elements allow the ends of the central bar to slide through two opposite upper bars, to which the ends of the central bar are connected, thus ensuring that the cleaning element can rotate around its own axis, at an angle that will depend on the needs that arise during cleaning tasks.

According to another embodiment of the invention, the system further comprises at least one additional driving means and at least one additional controlling means, to mobilize and control the operation of the displacement elements of the central bar. In a preferred embodiment, each of the displacement elements of the central bar comprises at least one driving means and at least one controlling means for its operation.

According to another embodiment of the invention, the system further comprises at least one coupling element, coupled to at least one height adjustment element and which holds the at least one cleaning element in its central part. Said coupling element allows free movement of the cleaning element in terms of its inclination with respect to the horizontal, thanks to which the cleaning element can be inclined at the angle at which the solar panels are arranged, without the need or help of some motive means.

According to another embodiment of the invention, the system further comprises at least one additional driving means and at least one additional controlling means, to mobilize and control the operation of the coupling element.

According to another embodiment of the invention, the system also comprises at least two turning elements, arranged at each of the ends of the at least two vertical bars, and attached to the at least two wheels. In a preferred embodiment, the system also comprises at least four turning elements, arranged at each of the ends of the at least four vertical bars, and attached to the at least four wheels. In this way, each of the wheels of the cleaning system can rotate on its own axis, granting multiple degrees of freedom to the movement of the system on the terrain of the solar plant, reducing the risk that the system cannot avoid or overcome any obstacle that arises along the way. Furthermore, since there is the possibility that each of the wheels can rotate independently, it is possible that the cleaning system operates in areas where mobility is extremely reduced for a vehicle to make a turning movement, where the cleaning system of the invention is capable of turning its wheels to only move in a straight line.

According to another embodiment of the invention, the system further comprises at least one locator device, arranged in the at least one compartment. In this way it is possible to know the location of the cleaning system at all times.

According to another embodiment of the invention, the system further comprises at least two energy storage means, arranged in the at least one compartment.

According to another embodiment of the invention, the at least two energy storage means correspond to lead-acid batteries, lithium batteries or batteries constructed from any element capable of storing energy.

According to another embodiment of the invention, the system also comprises at least one photovoltaic panel, arranged on the surface formed by the at least four upper bars of the at least one chassis. Thanks to the incorporation of this element, it is possible for the energy generated to be stored by the system's batteries cleaning, allowing it to operate completely autonomously in the solar plant, circulating between the rows of panels to carry out the cleaning tasks.

According to another embodiment of the invention, the system further comprises at least one video camera. The incorporation of this element allows a remotely located operator to observe the work of the cleaning system or remotely operate the mobilization of the system. Furthermore, using the images obtained, a computational analysis can be carried out on them, in order to obtain relevant information about the operation of the cleaning system, such as, for example, the level of cleaning of each of the rows.

According to another embodiment of the invention, the system further comprises at least one thermal imaging camera, to enable hot spot analysis.

According to another embodiment of the invention, the system also comprises at least one position sensor, where said sensor allows detecting the height and inclination of the panels when the cleaning system faces the row in which it will be carried out. cleaning, in addition to being able to detect other possible obstacles that may arise during the journey.

According to another embodiment of the invention, the system further comprises a communication means, arranged in at least one compartment. This means of communication is responsible for sending the operation data to an operation center and/or a storage cloud, as well as being responsible for alerting in the event that any of the electronic components of the cleaning system suffer any damage.. The media can also connect to the Internet to search for information on the state of the weather or receive it from an operations center, in order to determine whether or not it is appropriate to carry out cleaning tasks, where, on a rainy day, for example, cleaning will not be carried out.

According to another embodiment of the invention, the system further comprises at least one braking means, arranged on each of the at least two wheels. In a preferred embodiment, the system also comprises at least one braking means, arranged on each of the at least four wheels. Said braking means can be mechanical or hydraulic brakes, where they can also comprise a regenerative means that generates energy that can be stored by the energy storage means, so as to be used for the mobilization of the cleaning system.

According to the previous description, it can be seen that the cleaning system of the present invention is capable of addressing several of the problems present in the state of the art, mainly related to avoiding the presence of operators during cleaning tasks, an issue which usually occurs with current cleaning systems, generally to move them between one row and another. The present cleaning system, thanks to its mobilization system, made up of the chassis, wheels and driving and control means, is capable of moving autonomously between the rows of solar panels. This is carried out by incorporating the topography of the land through which the system must travel, marking the location of each of the rows of solar panels. Once this information is loaded into the controlling means of the cleaning system, said system is capable of moving through the rows of solar panels, following the route loaded into the controlling means thanks to the locator device, such as a GPS or similar.

On the other hand, the cleaning system of the invention can also be operated remotely by a worker in charge of this task, who may be present at the solar plant or located remotely, without the possibility of viewing the cleaning system, in where this work is carried out through a command that allows controlling each of the degrees of freedom of the system components. The worker in charge, if he can see the cleaning system, will be able to mobilize the system in the direction he deems appropriate, however, the system will send him an alert in case it leaves the loaded route, in order to avoid the risk. of collision or that the system could overturn due to a greater slope of the terrain. On the contrary, if the worker is located remotely from the solar plant, without the possibility of observing the cleaning system, he will still be able to operate it remotely, since a map will be displayed in the operation center where he can see the location of the cleaning system and the route it should follow through the rows of solar panels. In a preferred embodiment, the worker can view the operation of the cleaning system thanks to the video camera. In a preferred embodiment of the invention, the cleaning system is operated remotely by a worker thanks to the analysis of the images obtained through the camera, together with the use of positioning software and hardware.

Another problem that the cleaning system of the present invention takes care of is related to the possibility of offering a solution that does not require the installation or construction of additional civil works to those already existing in the solar plant, which many times occurs with autonomous cleaning systems of the state of the art, for which the placement of rails is necessary for their mobilization, which entails no less expense, which is completely saved thanks to the cleaning system of the invention, which through the multiple degrees of freedom of its components, can move without complications through the terrain on which the rows of solar panels are arranged.

### DESCRIPTION OF THE FIGURES

As part of the application, the following representative figures of the invention are presented, which show preferred configurations of the invention and, therefore, should not be considered as limiting the definition of the claimed subject matter.
- Figure 1 illustrates some of the positions that the cleaning system of the invention can adopt, according to the operation of the height regulating elements, when they operate together.
- Figure 2 illustrates some of the positions that the cleaning system of the invention can adopt, according to the operation of the adjustment means.
- Figure 3 illustrates some of the positions that the cleaning system of the invention can adopt, according to the operation of the central bar.
- Figure 4 illustrates some of the positions that the cleaning system of the invention can adopt, according to the operation of the coupling element.
- Figure 5 illustrates some of the positions that the cleaning system of the invention can adopt, according to the operation of the height regulating elements, when they operate independently.
- Figure 6 illustrates several views of the cleaning system of the invention.
- Figure 7 illustrates several views of the cleaning system of the invention, in conjunction with a solar panel.

### DETAILED DESCRIPTION OF THE FIGURES

Below, various figures of the automated cleaning system of the invention are presented, according to one of its preferred embodiments.

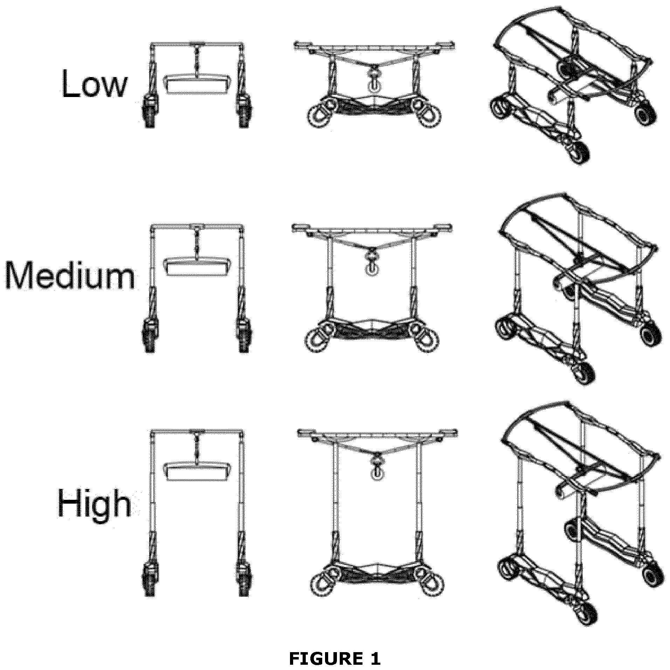

Figure 1 shows some of the positions that the cleaning system can adopt, according to the operation of the height regulating elements, such as pistons, present in each of the vertical bars of the chassis.

These height regulating elements allow the height of the chassis to be regulated, according to the conditions of the terrain and the arrangement of the solar panels in each of the rows.

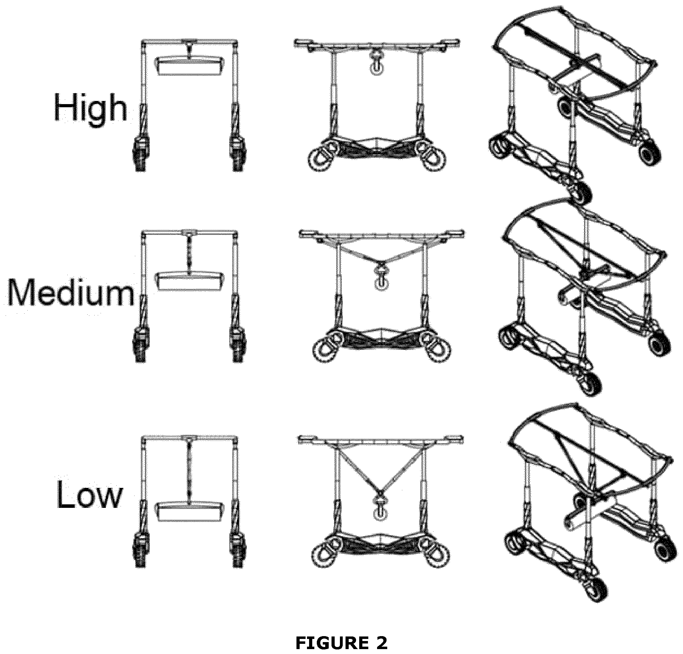

Figure 2 shows some of the positions that the cleaning system can adopt, according to the operation of the adjustment means, which contracts thanks to the height adjustment element arranged in its central part, and the two adjustment elements. displacement, arranged at their ends and coupled with the central bar that crosses the center of the upper part of the cleaning system. Said height and displacement adjustment elements may correspond to bushings, for example, which allow the adjustment means to move at its ends and contract, making it possible to regulate the height of the cleaning element. In a preferred embodiment, said cleaning element may correspond to a brush with bristles, for example, and the adjustment means may correspond to a bar or a steel cable or similar.

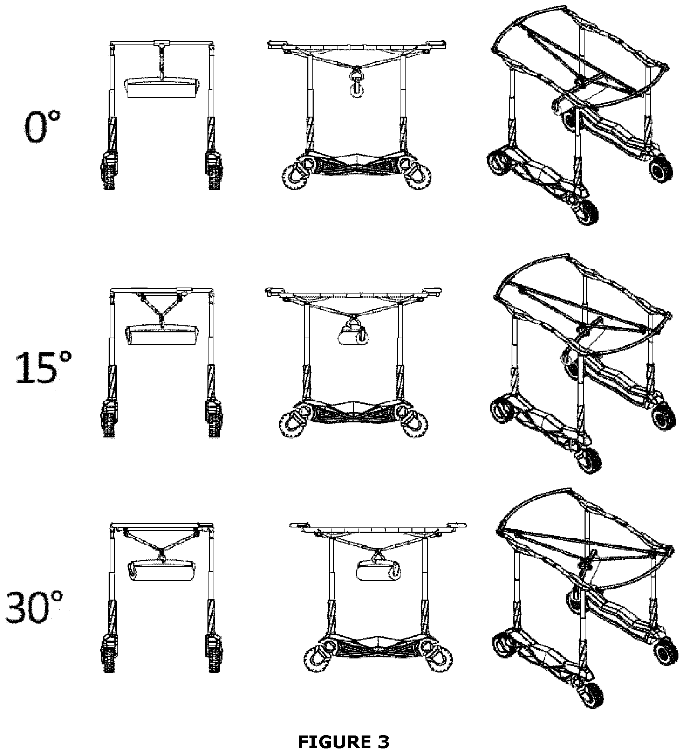

Figure 3 shows some of the positions that the cleaning system can adopt, according to the operation of the central bar, which is capable of sliding at its ends thanks to two displacement elements, such as bushings, coupled to two opposite upper bars of the chassis. From this configuration, the cleaning element is capable of rotating on its own axis in a range of between 0° and 30° for this preferred modality, being able to rotate at greater angles in case the size of the arc formed by the bars opposite tops are lengthened, to allow greater displacement of the ends of the central bar.

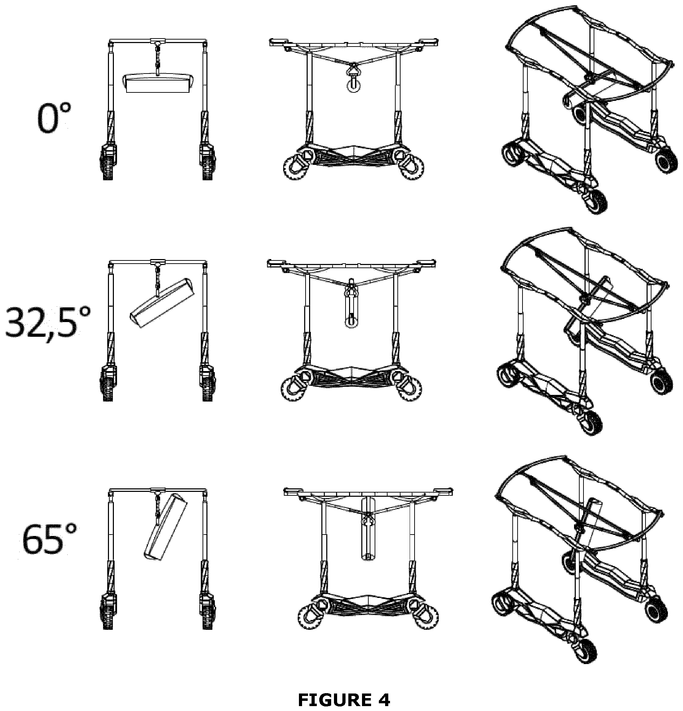

Figure 4 shows some of the positions that the cleaning system can adopt, according to the operation of the coupling element, coupled to the bending element of the height adjustment bar and which supports the cleaning element in its part. central. As mentioned above, said coupling element allows free movement of the cleaning element in terms of its inclination with respect to the horizontal, thanks to which the cleaning element can be inclined in a range of between 0° to 65°, depending of the inclination in which the panels are arranged or in case of having to overcome any obstacle that is on their surface.

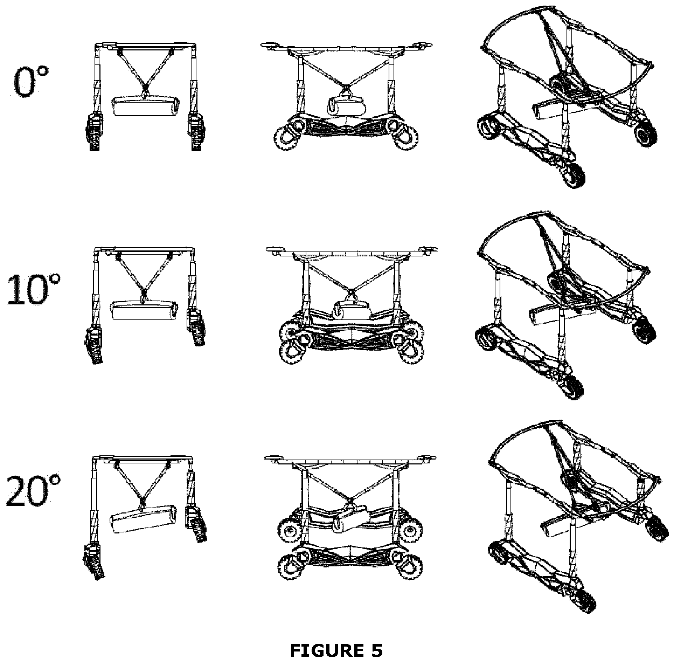

Figure 5 shows some of the positions that the cleaning system can adopt, according to the operation of the height regulating elements, when they operate independently, in this case in pairs, in order to cause the inclination of the upper surface of the cleaning system, which can vary in the range between 0° and 20°.

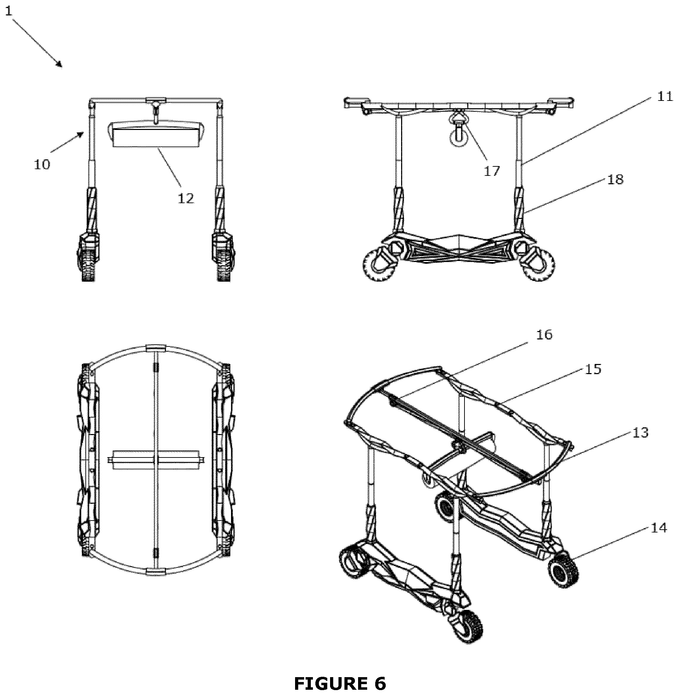

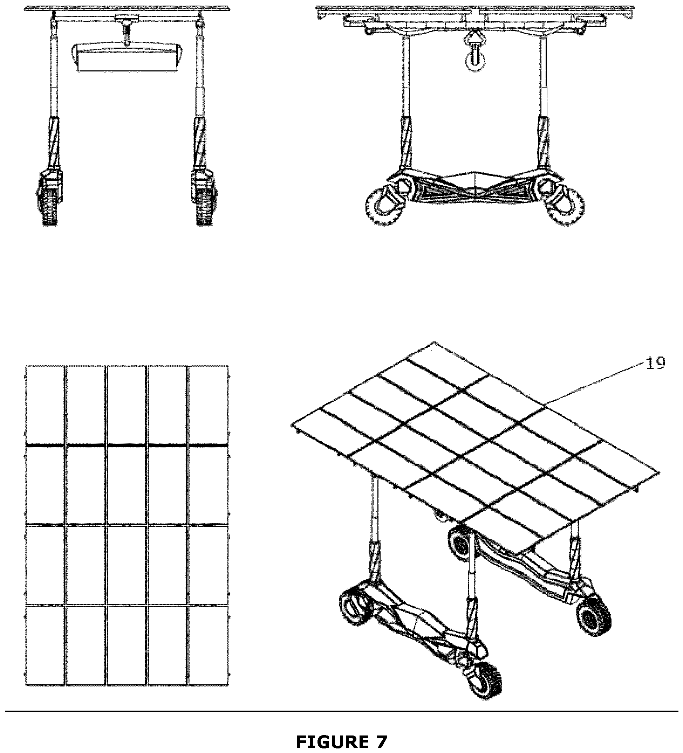

Finally, Figures 6 and 7 show several views of the cleaning system, without and with a solar panel, in order to appreciate all the construction details of the technology.

Specifically, the panel cleaning system (1) is observed, which comprises a chassis (10), which is made up of four vertical bars (11), two crossbars (13) and two longitudinal bars (15), where each of the vertical bars (11) is connected to a wheel (14) at one of its ends. In addition, it is observed that the system (1) has a cleaning element (12), which is coupled through an adjustment means (17) to a central bar (16), unit at each of its ends to the cross bars (13). On the other hand, each of the vertical bars (12) comprises a height regulating element (18), such as pistons, which allows the coordinated or independent elevation of each of said vertical bars (12). Finally, Figure 7 shows the panel cleaning system (1) with the same components detailed in Figure 6, but including a solar panel (19), which allows all the electronic components of the system (1) to be energized, such as motors, controllers, etc. (not shown in the figures).

### NUMERICAL REFERENCES

- 1: Panel cleaning system
- 10: Chassis
- 11: Vertical bar
- 12: Cleaning element
- 13: Crossbar
- 14: Wheel
- 15: Longitudinal bar
- 16: Central Bar
- 17: Adjustment means
- 18: Height adjustment element
- 19: Solar Panel

## Claims

1. An automated solar panel cleaning system in a solar plant, **characterized in that** it comprises:
- at least one chassis, which comprises:
∘ at least two vertical bars; and
∘ at least one upper longitudinal bar, which joins the at least two vertical bars;
- at least two wheels, arranged at one end of each of the at least two vertical bars;
- at least one cleaning element;
- at least one driving means, to mobilize at least two wheels; and
- at least one controller means, to control the operation of each of the at least two wheels.

2. The automated cleaning system of claim 1, **characterized in that** it also comprises at least one additional driving means, which allows at least one cleaning element to turn.

3. The automated cleaning system of any of claims 1 to 2, **characterized in that** the chassis also comprises at least two additional vertical bars.

4. The automated cleaning system of any of claims 1 to 3, **characterized in that** it also comprises an additional upper longitudinal bar and at least two upper crossbars, forming the least four upper bars an upper framework.

5. The automated cleaning system of claim 4, **characterized in that** it also comprises at least two cables connected to the ends of the at least one cleaning element, and connected to at least two carriages, arranged in any of the at least four upper bars.

6. The automated cleaning system of claim 5, **characterized in that** it also comprises at least one arm connected to one of the ends of the at least one cleaning element and one of the at least two carriages.

7. The automated cleaning system of claim 4, **characterized in that** it also comprises at least one central bar, which transversely crosses through the center of the upper frame and that binds at its ends to at least two upper longitudinal bars.

8. The automated cleaning system of claim 5, **characterized in that** the at least one central bar comprises at least one adjustment medium.

9. The automated cleaning system of claim 6, **characterized in that** the at least one cleaning element is joined in its central part to at least one adjustment medium.

10. The automated cleaning system of any of claims 3 to 7, **characterized in that** it also comprises at least two additional wheels, arranged at one of the ends of each of the at least two additional vertical bars.

11. The automated cleaning system of any of claims 1 to 7, **characterized in that** it also comprises at least one additional driving means and at least one additional controller means, to mobilize and control the operation of each of the at least two wheels.

12. The automated cleaning system of claim 8, **characterized in that** it also comprises at least an additional driving means and at least an additional controller, to mobilize and control the operation of at least two wheels and at least two additional wheels.

13. The automated cleaning of claim 8, **characterized in that** it also comprises at least three additional driving means and at least three additional controlling means, to mobilize and control the operation of each of the at least two wheels and each of the at least two additional wheels, respectively.

14. The automated cleaning system of any of claims 1 to 11, **characterized in that** it also comprises at least one compartment to accommodate the at least one driving means and the at least one controller means.

15. The automated cleaning system of any of claims 1 to 12, **characterized in that** it also comprises at least two height regulation elements, arranged in at the least two vertical bars.

16. The automated cleaning system of any of claims 3 to 12, **characterized in that** it also comprises at least four height regulation elements, arranged in the at least four vertical bars.

17. The automated cleaning system of any of claims 13 or 14, **characterized in that** it also comprises at least one additional driving means and at least one additional controlling means, to mobilize and control the operation of at the least two or four height regulation elements.

18. The automated cleaning system of any of claims 6 to 15, **characterized in that** the at least one adjustment means comprises at least one height adjustment element, arranged in its central part and connecting with the central part of the at least one cleaning element.

19. The automated cleaning system of any of claims 6 to 16, **characterized in that** the at least one adjustment means comprises at least two displacement elements, arranged at its ends and coupled with the at least one central bar.

20. The automated cleaning system of claim 17, **characterized in that** it also comprises at least one additional driving means and at least one additional controller means, to mobilize and control the operation of the height adjustment element and the displacement elements.

21. The automated cleaning system of any of claims 5 to 18, **characterized in that** the at least one central bar comprises at least two displacement elements, arranged at its ends and coupled with at least two opposite upper bars.

22. The automated cleaning system of claim 19, **characterized in that** the system also comprises at least one additional driving means and at least one additional controller means, to mobilize and control the operation of the displacement elements of the central bar.

23. The automated cleaning system of any of claims 16 to 20, **characterized in that** it also comprises at least one coupling element, coupled to at least one height adjustment element and that holds at least one cleaning element in its central part.

24. The automated cleaning system of claim 21, **characterized in that** it also comprises at least one additional driving means and at least one additional controller means, to mobilize and control the operation of the coupling element.

25. The automated cleaning system of any of claims 1 to 22, **characterized in that** it also comprises at least two turning elements, arranged at each end of the at least two vertical bars, and united to the at least two wheels.

26. The automated cleaning system of any of claims 8 to 22, **characterized in that** it also comprises at least four turning elements, arranged at each end of the at least four vertical bars, and united to the at least four wheels.

27. The automated cleaning system of any of claims 1 to 24, **characterized in that** the system also comprises, at least one locator device, arranged in at least one compartment.

28. The automated cleaning system of any of claims 1 to 25, **characterized in that** it also comprises at least two energy storage means, arranged in the at least one compartment.

29. The automated cleaning system of claim 26, **characterized in that** the at least two energy storage means correspond to acid-pick batteries, lithium batteries or batteries built from any element capable of storing energy.

30. The automated cleaning system of any of claims 4 to 27, **characterized in that** it also comprises at least one photovoltaic panel, arranged on the surface that make up at least four upper bars of at least one chassis.

31. The automated cleaning system of any of claims 1 to 28, **characterized in that** it also comprises at least one video camera.

32. The automated cleaning system of any of claims 1 to 29, **characterized in that** it also comprises at least one thermographic chamber.

33. The automated cleaning system of any of claims 1 to 30, **characterized in that** it also comprises at least one position sensor.

34. The automated cleaning system of any of claims 1 to 31, **characterized in that** system also comprises a communication means, arranged in at least one compartment.

35. The automated cleaning system of any of claims 1 to 32, **characterized in that** it also comprises at least one braking means, arranged in each of the at least two wheels.

36. The automated cleaning system of any of claims 8 to 32, **characterized in that** it also comprises at least one braking means, arranged in each of the at least four wheels.
